# EUROPÄISCHE PATENTSCHRIFT

(11) **EP 1 575 752 B1**
(45) Veröffentlichungstag und Bekanntmachung des Hinweises auf die Patenterteilung: **16.03.2011**
(21) Anmeldenummer: 03757943.0
(22) Anmeldetag: 09.10.2003
(51) Int. Cl.: B29C 44/34

(54) **VORRICHTUNG UND VERFAHREN ZUR HERSTELLUNG PHYSIKALISCH GETRIEBENER STRUKTURSCHÄUME IM SPRITZGIESSPROZESS UNTER VERWENDUNG DYNAMISCHER MISCHELEMENTE**
DEVICE AND METHOD FOR PRODUCING PHYSICALLY EXPANDED STRUCTURAL FOAMS DURING AN INJECTION MOLDING PROCESS INVOLVING THE USE OF DYNAMIC MIXING ELEMENTS
DISPOSITIF ET PROCEDE DE FABRICATION DE MOUSSES STRUCTURELLES MOUSSEES PHYSIQUEMENT PAR MOULAGE PAR INJECTION A L'AIDE D'ELEMENTS DE MELANGE DYNAMIQUES

(30) Priorität: 22.10.2002 DE 10249314
(43) Veröffentlichungstag der Anmeldung: 21.09.2005
(73) Patentinhaber: PEGUFORM GMBH, 79268 Bötzingen (DE)
(72) Erfinder: SCHLUMMER, Christian, 79102 Freiburg (DE)
(74) Vertreter: Neunert, Peter Andreas
(86) Internationale Anmeldenummer: PCT/EP2003/011197
(87) Internationale Veröffentlichungsnummer: WO 2004/037510

(56) Entgegenhaltungen:
- EP-A- 1 072 375
- DE-A- 2 402 203
- US-A- 5 297 948

## Beschreibung

Der Erfindung liegt die Aufgabe zugrunde, ein physikalisches Treibmittel mit hoher Reproduzierbarkeit und Prozesssicherheit gleichmäßig in den Schmelzestrom einer Spritzgießmaschine einzubringen und zu verteilen, um eine homogene Polymer/Treibmittel-Lösung zu generieren und zwar unter Verwendung einer konventionellen Spritzgießmaschine.

Aus den Patentschriften DE 24 02 203 C3 und US 5 297 948 A sind jeweils Vorrichtungen zur Herstellung geschäumter Kunststoffformteile mit der Einschränkung auf ein Extrusionsverfahren bekannt, bei welchen das Treibmittel nur in einigen, örtlich begrenzten Bereichen eingebracht wird. Diese Erfindung ist eine Weiterentwicklung der in unserer Patentanmeldung EP 1 256 430 A1 beanspruchten Vorrichtung zur Herstellung geschäumter Kunststoffformteile. Bei besagter Vorrichtung handelt es sich um eine Spritzgießmaschine, welche zur Herstellung eines geschäumten Kunststoffformteils eingesetzt wird. Um eine schäumbare Kunststoffmasse zu erzeugen, wird dem Kunststoffmaterial ein Treibmittel zugefügt, welches im Spritzgießwerkzeug durch Expansion des unter Druck in der Schmelze gelöst vorliegenden Treibmittels infolge Druckabbaus während des Einspritzens ins Spritzgießwerkzeugs Gasblasen erzeugt, welche infolge Viskositätserhöhung während der Abkühlung der Schmelze eingefroren werden und letztlich die Schaumstruktur bilden. Für Vorrichtung und das Verfahren, welche in EP 1 256 430 A1 vorgestellt werden, kommen physikalische Treibmittel zum Einsatz. Der Eintrag eines physikalischen Treibmittels in eine Polymerschmelze erfolgt durch eine poröse Hülse. Diese poröse Hülse ist auf dem Schneckenkolben montiert, vorzugsweise in einem Bereich zwischen der Meteringzone und einer stromabwärts anschließenden Mischzone. Die poröse Hülse besteht aus porösem oder permeablem Material, durch welches das physikalische Treibmittel unter Druck hindurchtritt, um sich in der Schmelze zu lösen. Diese poröse Hülse ist als ein dünnwandiges, zylinderförmiges Teil für den Gaseintrag für Polymerschmelzen unterschiedlichster Zusammensetzung hervorragend geeignet, da sie eine große Oberfläche aufweist. Die in der Patentanmeldung EP 1 256 430 A1 vorgestellte Lösung betrifft eine Begasung mit nachgeschaltetem Mischvorgang mittels einem auf dem Schneckenkolben montierten Mischelement. Die Begasung erfolgt in einem Abschnitt des Schneckenkolbens, was bedeutet, dass das Begasungselement die Bewegungen des Schneckenkolbens ausführt. Durch die Verwendung eines Begasungselements in einem Abschnitt des Schneckenkolbens werden die Investitionskosten der Gesamtanlage herabgesetzt, weil in einer konventionellen Spritzgießmaschine lediglich der Schneckenkolben ausgetauscht werden muss, um mit derselben Anlage geschäumte Kunststoffformteile herzustellen. Die Verwendung einer Begasungseinrichtung im Schneckenkolben ist zwar aus DE 20 53 646 B bekannt, allerdings münden die als Einspritzdüsen ausgeführten Treibmittelöffnungen in den Verteilerkopf. Durch die Treibmittelöffnungen erfolgt der Eintrag des Treibmittels in Form eines Strahls in die Schmelze. Durch die Ausführung des Begasungselements als poröse Hülse, welche sich axial mit dem Schneckenkolben mitbewegt und gleichzeitig auch dessen Rotationsbewegungen mit ausführt, erfolgt ein gleichmäßiger Treibmitteleintrag, weil durch die poröse Oberfläche gar kein Strahl entstehen kann, sondern allenfalls ein Strahlbündel, im allgemeinen werden allerdings durch die Vorrichtung gemäß der Erfindung oder der EP 1 2256 430 A1 Treibmittelblasen in die Polymerschmelze eingetragen. In der unmittelbaren Umgebung der porösen Hülse erfolgt durch den Gaseintrag eine unvollständige Durchmischung des Gases mit der Polymerschmelze, da Scherkräfte, welche die Durchmischung erleichtern, am Umfang der glatten Hülse gering sind.

Gute Mischwirkungen können hingegen erreicht werden durch Scherungen, Dehnungen und Umlagerungen der Schmelze.

Ein möglicher Weg, dieses Ziel zu erreichen, wird in DE101 50 329 A1 dargestellt. Das komprimierte Treibmittel wird über ein statisches Mischelement, welches zwischen Plastifizieraggregat und Verschlussdüse montiert wird, mit der Schmelze in Kontakt gebracht. Eine poröse Sintermetall-Fläche, welche die Mischelemente umschließt, dient dabei als Kontaktelement zwischen Treibmittel und Polymerschmelze. Konzentrations- und Druckunterschiede bewirken über Diffusions- und Sorptionsvorgänge eine Aufnahme des Treibmittels in der Schmelze. Die Homogenisierung des Polymer/Treibmittelgemisches geschieht dabei während des Einspritzvorgangs durch die den Schmelzekanal unterbrechenden Stege des statischen Mischelements. Die Umlagerungen, Aufteilungen und Dehnungen der Schmelze innerhalb des Mischers begünstigen dabei die Diffusionsvorgänge. Die Aufnahme des Treibmittels in die Schmelze wird dadurch nachhaltig begünstigt.

Ein Nachteil in der in DE 101 50 329 A1 offenbarten Erfindung besteht darin, dass der Eintrag des Treibmittels erst kurz vor der Verschlussdüse erfolgt. Somit bleibt wenig Zeit für eine vollständige Durchmischung der Schmelze vor dem Durchtritt durch die Verschlussdüse in die daran anschließende Kavität. Um eine vollständige Durchmischung der Schmelze mit dem Treibmittel gewährleisten zu können, muss daher entweder ein Mischelement mit großer Baulänge oder ein hoher Druck an das Mischelement angelegt werden, damit das Treibmittel sich gleichmäßig in der Polymerschmelze verteilt, bevor es über die Verschlussdüse in die Kavität gelangt. Auch in EP 1 256 430 A1 wird als prinzipieller Nachteil von statischen Mischelementen die Scherwirkung derselben genannt, welche die Polymermatrix beschädigen kann. Ein weiterer Nachteil eines Einsatzes eines statischen Mischelements im Bereich des Schneckenkolbens ist die aufwändige Ventilsteuerung, die zur Regelung des Treibmitteleintrags dient, womit sich die Anlagekosten und die Störanfälligkeit erhöhen. Bei der konstruktiven Realisierung der porösen Hülse nach EP 1 256 430 A1 besteht die Gefahr, dass durch die großen Dichtoberflächen im Betrieb Undichtigkeiten auftreten, wodurch das Treibmittel nicht mehr ausschließlich durch die poröse Hülse, sondern zusätzlich über die Dichtstellen in die Polymerschmelze gelangt. Wenn es durch eine Störung im Treibmittelsystem zu einer Absenkung des Drucks kommt, könnte außerdem der Fall eintreten, dass die unter höherem Druck stehende Polymerschmelze über derartige Undichtigkeiten in das Treibmittelzufuhrsystem gelangt.

Um diesen Nachteilen des Standes der Technik Abhttfe zu verscharfen, wird eine Lösung gemäß des Ansprüche 1 und 11 vorgeschlagen. Dabei ist vorgesehen, dass mindestens ein dynamisches, also ein mit dem Schneckenkolben mitbewegbares Mischelement einzusetzen, über welches gleichzeitig der Treibmitteleintrag erfolgt. Die Erfindung sieht zudem vor, dass der Schneckenkolben stromabwärts einer Meteringzone poröse oder permeable Mischelemente aufweist, die über eine Treibmittelzuführeinrichtung im Kern des Schneckenkolbens mit dem Treibmittel beaufschlagbar sind und das Treibmittel gleichmäßig in die Schmelze einbringen. Während der Plastifizierphase rotieren die Mischelemente in der Polymerschmelze bei gleichzeitiger Translationsbewegung des Schneckenkolbens. Diese Kombination aus Translation und Rotation während der Dosierphase bewirkt eine ständige Durchmischung und Umlagerung der Schmelze bei gleichzeitiger Treibmittelbeaufschlagung und sorgt somit für ein homogenes Polymer/Treibmittelgemisch.

Die Kombination von Mischelement und Eingasungsbereich in demselben Abschnitt des Schneckenkolbens erlaubt nicht nur eine Kombination von Mischelement und Treibmitteleintrag in einem eng begrenzten Abschnitt des Schneckenkolbens. Die geometrische Form des Mischelements als rotationssymmetrischer Körper erlaubt außerdem einen punktgenauen Eintrag von Treibmittel in die Polymerschmelze.

Des weiteren kann die Menge des Treibmitteleintrags genau gesteuert werden. Durch die Ausführung der Mischelemente als rotationssymmetrische Körper, welche in die Schmelze im Ausgasungsbereich hineinragen, wird eine gleichmäßige Durchmischung und Homogenisierung des Treibmitteleintrags gewährleistet. Durch die Rotation und Translation der Schnecke erfolgt die Durchmischung auch schon bei einer kurzen Verweilzeit der Schmelze im Eingasungsbereich.

Nur das Mischelement selbst besteht aus porösem oder permeablen Material, das Schneckenkolbenelement kann aus einem Material bestehen, welches höhere Festigkeit aufweist. Die auf die Mischelemente einwirkenden dynamischen Kräfte, welche durch die Bewegung der Mischelemente in der Schmelze hervorgerufen werden, wirken somit nur auf kleine, als rotationssymmetrische Körper ausgeführte Mischelemente. Dadurch können die Belastungen durch Scher- oder Torsionskräfte auf ein Minimum reduziert werden.

Die Mischelemente selbst weisen eine Dichtung auf, durch welche gewährleistet wird, dass der Gaseintrag ausschließlich über die poröse Oberfläche erfolgt. Das bedeutet, dass die Größe der Treibmitteleinschlüsse über die gesamte Schmelzeoberfläche genau eingestellt werden kann.

Mit Hilfe der Erfindung ist es möglich, mit nur geringen Änderungen an einer konventionellen Spritzgießmaschine physikalisch getriebene Strukturschaum-Formteile herzustellen, welche sich durch eine kompakte Außenhaut und einen geschäumten Kern auszeichnen und somit im Vergleich zu kompakten Bauteilen materialspezifische Vorteile mit Einsparungen an Gewicht, Material und damit Kosten verbinden. Des weiteren ist kein Eingriff in die Maschinensteuerung erforderlich, so dass die Investitionskosten gering sind.

Die Erfindung hat im Vergleich zum Stand der Technik folgende Vorteile:
- Geringe Investitionskosten, da keine aufwendige Spezialmaschine notwendig ist, sondern lediglich ein Austausch des Schneckenkolbens einer konventionellen Spritzgießmaschine.
- Gleichmäßige Treibmitteleinbringung aufgrund mehrerer, axial mitwandemder und rotierender Eingasungsstellen während der Polymerdosierung.
- Hoher Homogenisierungsgrad aufgrund intensiver Mischvorgänge bei einer im Verlauf der Eingasung stets gleichen wirksamen Länge der Misch- und Scherzonen des Schneckenkolbens.
- Optimales Lösungsverhalten aufgrund langer Diffusionszeiten und großer Diffusionsflächen bei kleinen Diffusionswegen.
- Reproduzierbarkeit des Prozesses unabhängig vom Dosiervolumen.
- Hoher Wirkungsgrad des Treibmittels.
- Leichte Austauschbarkeit defekter oder verstopfter Mischelemente
- Kombinationsmöglichkeit von Mischelementen verschiedener Bauart und vielfältige Optimierungsmöglichkeiten in Abhängigkeit von dem zu verarbeitenden Polymermaterial

Dadurch, dass das Treibmittel über die porösen oder permeablen Mischdome gleichmäßig in die Polymerschmelze eingebracht wird, ist eine optimale Treibmitteleinbringung während der Polymerdosierung möglich. Es ergibt sich ein verbessertes Lösungsverhalten aufgrund langer Diffusionszeiten und großer Diffusionsflächen bei kleinen Diffusionswegen. Außerdem ist eine hohe Reproduzierbarkeit des Spritzgießprozesses unabhängig vom Dosiervolumen und eine optimale Nutzung des Treibmittels feststellbar. Durch die Rotations- und Translationsbewegung der Mischelemente in der Polymerschmelze und der damit einhergehenden Scherwirkung werden lokale Konzentrationsunterschiede und Treibmittelagglomerate verhindert. Schließlich hat die Erfindung den Vorteil geringer Investitionskosten, da keine aufwendige Spezialmaschine notwendig ist, sondern lediglich ein Austausch des Schneckenkolbens der konventionellen Spritzgießmaschine. Eine verlängerte Einspritzeinheit ist ebenfalls nicht erforderlich. Es genügt eine Standardlänge der Einspritzeinheit im Bereich des 20- bis 25-fachen des Außendurchmessers des Schneckenkolbens.

Erfindungsgemäß ist vorgesehen, dass der Durchmesser des Schneckenkolbens im Bereich der porösen oder permeablen Mischelemente des Schneckenkolbens verringert ist. Die vergrößerte Schneckengrundtiefe ermöglicht es aufgrund des geringen Druckniveaus der Polymerschmelze im Eingasungsbereich, dass das Treibmittel direkt zugeführt werden kann, ohne dass eine Dosierstation erforderlich ist. Vorzugsweise werden die Mischelemente gleichmäßig in mehreren Reihen versetzt auf dem Umfang des Schneckenkolbens vorgesehen, um eine gleichmäßige Verteilung des Treibfluides in der Schmelze zu gewährleisten.

Vorzugsweise wird das Treibmittel dem Schneckenkolben über ein den Schneckenkolben radial umschließendes Hochdruck-Dichtungsgehäuse während der Dosierphase zugeführt. Dabei liegt das physikalische Treibmittel als Fluid vor.

Das Hochdruck-Dichtungsgehäuse erhält das Treibmittel von mindestens einer Druckflasche. Dies hat den Vorteil, dass keine Dosierstation erforderlich ist.

Das Hochdruck-Dichtungsgehäuse bewegt sich simultan mit der Axialbewegung des Schneckenkolben ohne Rotation in Axialrichtung mit. Dies ermöglicht eine gleichmäßige Treibmitteleinbringung aufgrund des flächigen, axial mitwandernden und rotierenden Eingasungsbereichs während der Polymerdosierung.

Die Polymer-/Treibmittellösung wird bei einer im Verlauf der Eingasung stets gleichen wirksamen Länge von Misch- und Scherelementen des Schneckenkolbens homogenisiert. Die Injektion des Treibmittels findet während der Dosierphase statt.
- Fig. 1: ist eine Schnittdarstellung einer Spritzgießmaschine mit Schneckenkolben
- Fig. 2: zeigt ein Detail eines Mischelements
- Fig. 3: zeigt eine mögliche Anordnung der Mischelemente auf dem Schneckenkolben

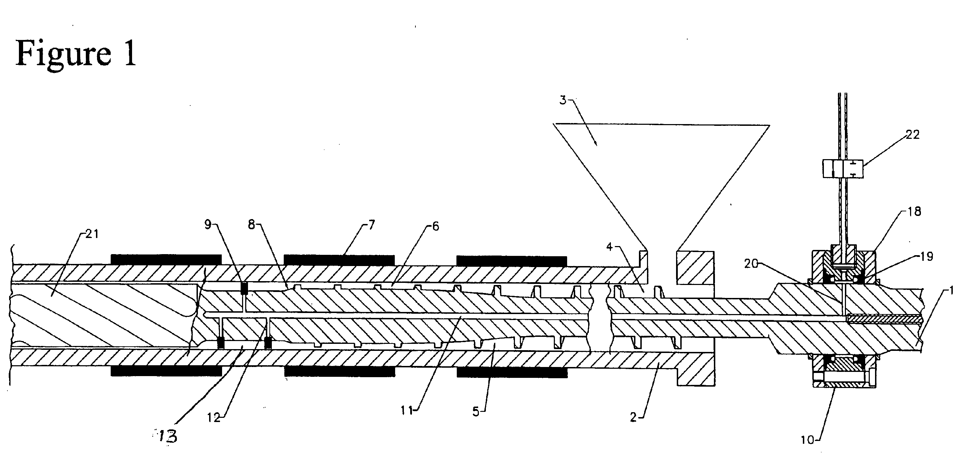

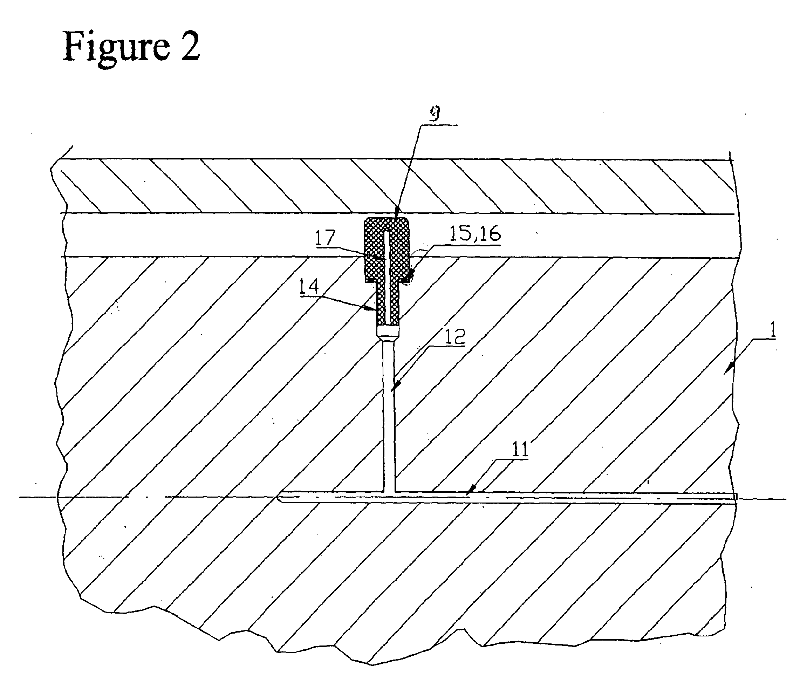

Im folgenden wird unter Bezugnahme auf die Zeichnung Fig.1 und Fig. 2 die Erfindung näher erläutert:
Fig. 1 zeigt eine Spritzgießmaschine mit einem in der Einspritzeinheit 2 rotierenden und während der Einspritzphase axial bewegtem Schneckenkolben 1.

Das Polymergranulat wird über einen Materialtrichter 3 zugeführt und von dem rotierenden Schneckenkolben 1 im Bereich einer Einzugszone 4 eingezogen. Die sich anschließende Kompressionszone 5 und Meteringzone 6 bewirken unter Zuhilfenahme der externen Zylinderheizung 7 das Aufschmelzen, Komprimieren und Homogenisieren des polymeren Materials, so dass am Ende der Meteringzone 6 eine thermisch und stofflich homogene Polymerschmelze vorliegt. Am Ende 8 der Meteringzone 6 des Schneckenkolbens 1 ist der Schneckengrund sprunghaft vergrößert 8, d.h. der Durchmesser des Schneckenkolbens 1 ist sprunghaft verringert. In dem Bereich des verringerten Durchmessers sind poröse oder permeable Mischelemente 9 vorgesehen, die über eine Treibmittelzuführeinrichtung 10 und eine Bohrung 11 mit einem physikalischen Treibmittel beaufschlagbar sind, wobei das Treibmittel gleichmäßig in die Polymerschmelze eingebracht wird.

Die porösen oder permeablen Mischelemente 9 dienen als Kontaktfläche zwischen dem Treibmittel und der Polymerschmelze. Die Änderung der Grundtiefe des Schneckenkolbens führt in diesem Abschnitt, der sogenannten Eingasungszone 13, zu einer Druckabsenkung. Das verdichtete Treibmittel, z.B. ein Treibfluid, wird über die Bohrung 11 in der Schneckenkolbenlängsachse und mehrere radiale Bohrungen 12 zur Verteilung über die Mischelemente 9 zugeführt.

Die porösen oder permeablen Mischelemente 9 sind aus Sintermetall oder Keramik gebildet.

Die Bohrungen 11, 12 sind stromaufwärts des Eingabetrichters 3 mit einer Treibmittelzuführeinrichtung 10 verbunden. Hierzu umschließt ein Dichtungsgehäuse 18 mit einem Gehäusekern und verschraubbaren Deckel den Schneckenkolben 1. Das Dichtungsgehäuse 18 ist zwischen einer nicht dargestellten Antriebseinrichtung für den Schneckenkolben 1 und dem Plastizierzylinder 2 montiert und ist gegen Verdrehen gesichert. Das Dichtungsgehäuse 18 bewegt sich simultan mit der Axialbewegung des Schneckenkolbens 1. Der axiale Hub des Schneckenkolbens 1 entspricht beispielsweise dem dreifachen Durchmesser des Einspritzzylinders 2. Das Dichtungsgehäuse 18 weist spezielle Rotationsdichtungen 19 auf und ist mit Hilfe von Gleitringen auf dem Schneckenkolben zentriert. Ein axiales Verschieben des Dichtungsgehäuses 18 wird durch mechanische Spannelemente verhindert. Als Rotationsdichtungen 19 sind Gleitringdichtungen oder Radial-Wellendichtringe einsetzbar. Eine oder mehrere radiale Bohrungen 20 verbinden den Druckraum der Treibmittelzuführeinrichtung 10 mit der axialen Bohrung 11 in der Längsachse des Schneckenkolbens 1.

Nach der Zuführung des Treibmittels über die Oberfläche der Mischelemente verteilen förderwirksame Scherelemente 21, das Polymer-/Treibmittelgemisch.

Die Treibmittelzuführeinrichtung 10 erhält das Treibmittel vorzugsweise über handelsübliche Druckgasflaschen. Ein elektrisch, pneumatisch oder hydraulisch betätigtes Ventil 22 verbindet jeweils während der Dosierphase des polymeren Materials die ggf. mit Hilfe eines Druckminderventils gedrosselte Treibmittelversorgung mit dem Hochdruck-Dichtungsgehäuse 18.

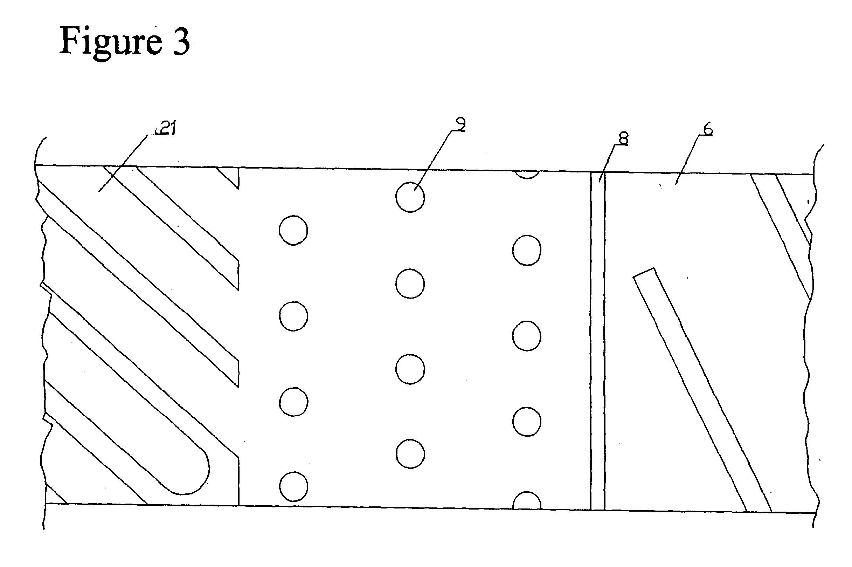

Fig. 2 zeigt ein Ausführungsbeispiel der Mischelemente. Ein rotationssymmetrischer Stift aus porösem Material 9 wird dabei in einer Gewindebohrung 14 senkrecht zur Achse des Schneckenkolbens 1 verschraubt. Alternativ dazu kann auch eine Presspassung oder andere Klemmvorrichtung vorgesehen sein. Alternativ dazu könnten auch federbelastete Vorsprünge zum Einsatz kommen, welche in Nuten des Schneckenkolbens einrasten. Derartige Einrastmechanismen können auch eine Demontage der Mischelemente ermöglichen, was zu Reinigungszwecken erforderlich sein kann. Der Mischstift ist dabei, ebenso wie die Bohrung im Schneckenkolben 1 abgesetzt und ermöglicht über die somit gebildete Schulter eine axiale Dichtstelle 15. Mit Hilfe von Kupfer-Dichtscheiben oder hochtemperaturfesten O-Ring-Dichtungen 16 kann somit der Mischstift gegen den Schneckenkolben abgedichtet werden und verhindert ein unkontrolliertes Eindringen von Treibmittel in die Kunststoffschmelze über die Kontaktfläche zwischen Mischstift und Schneckenkolben. Im Bohrungsgrund des Einschraubgewindes befindet sich eine zur Achse des Schneckenkolben radiale Bohrung 12, welche auf die Axialbohrung 11 im Schneckenkolben trifft und somit die Verbindung zur Treibmittelzufuhr darstellt. Um ein möglichst gleichmäßiges Ausströmen des Treibmittels über die Oberfläche des Mischstiftes zu generieren, kann dieser ggf. mit einer Axialbohrung 17 versehen werden. Damit wird gewährleistet, dass die Fließwiderstände durch das permeable Material zu allen Stellen der Oberfläche gleich ist. Die Geometrie der Mischelemente kann neben der zylindrischen Form auch kegelförmig sein. Dies hat den Vorteil, dass aufgrund der abnehmenden Stirnfläche die thermisch induzierte Inhomogenitäten infolge Dissipationserwärmung zur Zylinderwand verringert werden. In Fig. 3 ist eine Abwicklung des Schneckenkolbens 1 im Bereich der Eingasungsstellen zwischen Meteringzone 6 und Scherzone 21 mit der entsprechenden Verteilung der Mischelemente 9 dargestellt.

Ein Mischelement kann aus Zylindern unterschiedlichen Durchmessers bestehen, kegelige oder kegelstumpfförmige Form aufweisen oder eine Figur in Form einer Schlangen- oder Schraubenlinie darstellen.

### Bezugszeichenliste

- 1.: Schneckenkolben
- 2.: Einspritzzylinder
- 3.: Materialtrichter
- 4.: Einzugszone
- 5.: Kompressionszone
- 6.: Meteringzone
- 7.: Zylinderheizung
- 8.: Vergrößerter Schneckengrund
- 9.: Mischelement
- 10.: Treibmittelzufuhreinrichtung
- 11.: Bohrung
- 12.: Radialbohrung
- 13.: Eingasungszone
- 14.: Gewindebohrung
- 15.: axiale Dichtstelle
- 16.: O-Ring Dichtung
- 17.: Axialbohrung
- 18.: Dichtungsgehäuse
- 19.: Rotationsdichtung
- 20.: Radialbohrung
- 21.: Scherzone
- 22.: Ventil

## Patentansprüche

1. Vorrichtung zur Herstellung geschäumter Kunststoffformteile im Spitzgießprozess, vorzugsweise unter Verwendung eines physikalischen Treibmittels, wobei die Spritzgießmaschine mindestens einen Einspritzzylinder (2) enthält, welcher mindestens einen Schneckenkolben (1), welcher sich zumindest durch eine Einzugszone (4), eine Kompressionszone (5) und eine Meteringzone (6) erstreckt, beinhaltet, wobei sich an die Meteringzone (6) ein örtlich begrenzter Bereich mit verringertem Durchmesser zur Einbringung des Treibmittels anschließt, wobei der Schneckenkolben (1) stromabwärts der Meteringzone (6) poröse oder permeable, mit Treibmittel beaufschlagbare Mischelemente (9) aufweist, die als rotationssymmetrische Körper in die Schmelze hineinragen, wobei
die Mischelemente (9) aus Sintermetall oder Keramik bestehen und eine poröse Oberfläche aufweisen, wobei das Treibmittel der Schmelze über die poröse Oberfläche der Mischelemente (9) zuführbar ist.

2. Vorrichtung nach Anspruch 1,
**gekennzeichnet dadurch, dass** die Mischelemente (9) zur Eintragung eines physikalischen Treibmittels in die Polymerschmelze vorgesehen sind.

3. Vorrichtung nach Anspruch 1,
**gekennzeichnet dadurch, dass** die Treibmittelzuführeinrichtungung eine Bohrung (11) enthält.

4. Vorrichtung nach Anspruch 1,
**gekennzeichnet dadurch, dass** jedes Mischelement (9) mit einer Vorrichtung zur Verbindung mit dem Schneckenkolbens versehen ist.

5. Vorrichtung nach Anspruch 4,
**gekennzeichnet dadurch, dass** die Vorrichtung zur Verbindung mit dem Schneckenkolben eine Gewindebohrung umfasst.

6. Vorrichtung nach Anspruch 1,
**gekennzeichnet dadurch, dass** das Mischelement (9) zumindest einen abgesetzten Bereich aufweist.

7. Vorrichtung nach Anspruch 6,
**gekennzeichnet dadurch, dass** der abgesetzte Bereich eine Dichtung aufnehmen kann.

8. Vorrichtung nach Anspruch 7,
**gekennzeichnet dadurch, dass** die Dichtung aus Kupfer oder einem hochtemperaturfesten O-Ring besteht.

9. Vorrichtung nach Anspruch 1,
**gekennzeichnet dadurch, dass** ein Mischelement (9) aus Zylindern unterschiedlichen Durchmessers besteht.

10. Vorrichtung nach Anspruch 1,
**gekennzeichnet dadurch, dass** ein Mischelement (9) kegelige oder kegelstumpfförmige Form aufweist.

11. Verfahren zur Herstellung geschäumter Kunststoffformteile im Spitzgießprozess, vorzugsweise unter Verwendung eines physikalischen Treibmittels, wobei die Spritzgießmaschine mindestens einen Einspritzzylinder (2) enthält, welcher mindestens einen Schneckenkolben (1), welcher sich zumindest durch eine Einzugszone (4), eine Kompressionszone (5) und eine Meteringzone (6) erstreckt, beinhaltet, wobei das Treibmittel in einem sich an die Meteringzone (6) anschließendem, örtlich begrenzten Bereich mit verringertem Durchmesser zur Einbringung des Treibmittels eingebracht wird, wobei der Schneckenkolben (1) stromabwärts der Meteringzone (6) poröse oder permeable, mit Treibmittel beaufschlagbare Mischelemente (9) aufweist, die als rotationssymmetrische Körper in die Schmelze hineinragen, wobei das Treibmittel der Schmelze über die poröse Oberfläche der aus Sintermetall oder Keramik bestehenden Mischelemente (9) zugeführt wird.

## Claims

1. An apparatus for producing foamed moulded plastics material parts in the injection-moulding process, preferably whilst using a physical foaming agent, wherein the injection-moulding machine comprises at least one injection cylinder (2) which contains at least one reciprocating screw (1) which extends at least through an inlet zone (4), a compression zone (5) and a metering zone (6), wherein the metering zone (6) has adjoining it a locally limited region of reduced diameter for the introduction of the foaming agent, wherein the reciprocating screw (1) has - downstream of the metering zone (6) - porous or permeable mixing elements (9) which are capable of being acted upon with foaming agent and which project as rotationally symmetrical bodies into the melt, wherein the mixing elements (9) consist of sintered metal or ceramics and have a porous surface, wherein the foaming agent is capable of being supplied to the melt by way of the porous surface of the mixing elements (9).

2. An apparatus according to claim 1, **characterized in that** the mixing elements (9) are provided in order to introduce a physical foaming agent into the polymer melt.

3. An apparatus according to claim 1, **characterized in that** the foaming-agent supply device contains a bore (11).

4. An apparatus according to claim 1, **characterized in that** each mixing element (9) is provided with an apparatus for connection to the reciprocating screw.

5. An apparatus according to claim 4, **characterized in that** the apparatus for connection to the reciprocating screw comprises a threaded bore.

6. An apparatus according to claim 1, **characterized in that** the mixing element (9) has at least one offset region.

7. An apparatus according to claim 6, **characterized in that** the offset region can receive a seal.

8. An apparatus according to claim 7, **characterized in that** the seal consists of copper or a high-temperature-resistant O-ring.

9. An apparatus according to claim 1, **characterized in that** a mixing element (9) comprises cylinders of different diameter.

10. An apparatus according to claim 1, **characterized in that** a mixing element (9) has a tapered or frusto-conical shape.

11. A method of producing foamed moulded plastics material parts in the injection-moulding process, preferably whilst using a physical foaming agent, wherein the injection-moulding machine comprises at least one injection cylinder (2) which contains at least one reciprocating screw (1) which extends at least through an inlet zone (4), a compression zone (5) and a metering zone (6), wherein the foaming agent is introduced into a locally limited region of reduced diameter adjoining the metering zone (6) for the introduction of the foaming agent, wherein the reciprocating screw (1) has - downstream of the metering zone (6) - porous or permeable mixing elements (9) which are capable of being acted upon with foaming agent and which project as rotationally symmetrical bodies into the melt, wherein the foaming agent is supplied to the melt by way of the porous surface of the mixing elements (9) which consist of sintered metal or ceramics.

## Revendications

1. Dispositif de fabrication de pièces moulées en matière plastique expansées par un procédé d'injection, de préférence en utilisant un agent propulseur physique, dans lequel :
la machine d'injection comporte au moins un cylindre d'injection (2) équipé d'au moins une vis d'injection (1) composée d'au moins une zone d'entrée (4), d'une zone de compression (5) et d'une zone de distribution (6),
- une zone localement limitée à diamètre réduit faisant suite à la zone de distribution (6) pour introduire l'agent propulseur,
- la vis d'injection (1) ayant en aval de la zone de distribution (6), des éléments mélangeurs (9), poreux ou perméables, recevant l'agent propulseur, ces éléments pénétrant dans la masse fondue sous la forme d'organes symétriques en rotation,
dispositif dans lequel
- les éléments mélangeurs (9) sont en métal fritté ou en céramique et ont une surface poreuse, et
- l'agent propulseur est fourni à la masse fondue à travers la surface extérieure poreuse des éléments mélangeurs (9).

2. Dispositif selon la revendication 1,
**caractérisé en ce que**
les éléments mélangeurs (9) introduisent un agent propulseur physique dans la masse de polymère fondue.

3. Dispositif selon la revendication 1,
**caractérisé en ce que**
l'installation d'introduction d'agent propulseur comporte un perçage (11).

4. Dispositif selon la revendication 1,
**caractérisé en ce que**
chaque élément mélangeur (9) est muni d'un dispositif pour être relié à la vis d'injection.

5. Dispositif selon la revendication 4,
**caractérisé en ce que**
le dispositif comporte un taraudage pour être relié à la vis d'injection.

6. Dispositif selon la revendication 1,
**caractérisé en ce que**
l'élément mélangeur (9) comporte au moins une zone en retrait.

7. Dispositif selon la revendication 6,
**caractérisé en ce que**
la zone en retrait reçoit un joint.

8. Dispositif selon la revendication 7,
**caractérisé en ce que**
le joint est en cuivre ou est un joint torique réfractaire aux températures élevées.

9. Dispositif selon la revendication 1,
**caractérisé en ce que**
un élément mélangeur (9) se compose de cylindres ayant des diamètres différents.

10. Dispositif selon la revendication 1,
**caractérisé en ce qu'**
un élément mélangeur (9) a une forme conique ou tronconique.

11. Procédé de fabrication de pièces en matière plastique expansées par un procédé d'injection de préférence en utilisant un agent propulseur physique,
la machine d'injection ayant au moins un cylindre d'injection (2) avec au moins une vis d'injection (1) composée d'au moins une zone d'entrée (4), d'une zone de compression (5) et d'une zone de distribution (6), l'agent propulseur étant introduit dans une zone localement limitée, adjacente à la zone de distribution (6) et ayant un diamètre réduit pour introduire l'agent propulseur,
la vis d'injection (1) ayant en aval de la zone de distribution (6), des éléments mélangeurs (9) poreux ou perméables, recevant l'agent propulseur, ces éléments pénétrant dans la masse fondue sous la forme de corps symétriques en rotation,
procédé selon lequel
l'agent propulseur est fourni à la masse fondue par la surface poreuse des éléments mélangeurs (9) réalisés en métal fritté ou en matière céramique.
